Europäisches Patentamt

European Patent Office

Office européen des brevets

(11) Veröffentlichungsnummer: **0 048 300**

**A1**

(12) # EUROPÄISCHE PATENTANMELDUNG

(21) Anmeldenummer: 80105726.6

(22) Anmeldetag: 24.09.80

(51) Int. Cl.³: **G 03 B 21/32**
G 03 B 17/26, G 03 B 19/18
G 02 B 27/02

(43) Veröffentlichungstag der Anmeldung:
31.03.82 Patentblatt 82/13

(84) Benannte Vertragsstaaten:
AT BE CH DE FR GB IT LI NL SE

(71) Anmelder: Liedtke, Dieter W.
Unterbösch
CH-6331 Hünenberg(CH)

(72) Erfinder: Liedtke, Dieter W.
Unterbösch
CH-6331 Hünenberg(CH)

(74) Vertreter: Zenz, Joachim Klaus et al,
Am Ruhrstein 1
D-4300 Essen 1(DE)

(54) **Endlosbandkassette und Gerät für die lichtoptische Aufnahme und/oder Wiedergabe von Einzelbildern unter Verwendung der Endlosbandkassette.**

(57) Beschrieben wird eine besonders kompakte Endlosbandkassette mit einem Endlosfilmband (4) für die lichtoptische Aufnahme und/oder Wiedergabe von hintereinander angeordneten Einzelbildern (32) vorzugsweise in Super-8-Format. Ein das Endlos-Filmband aufnehmendes Gehäuse (2), das vorzugsweise als mehrteiliges Kunststofformteil ausgebildet ist, schließt eine den größten Teil des Endloss-Filmbandes aufnehmende Vorratskammer (8) und eine neben letzterer gelegene Lichtdurchtrittskammer (12) ein, die eine ein Bildfenster (14) begrenzende Außenwand (16) und eine dieser gegenüberliegende und/oder seitliche Lichteintrittsöffnung (18) aufweist, wobei zwischen beiden Gehäusekammern (8, 12) eine Trennwand (28) vorgesehen ist, in der Durchgangsöffnungen zur Durchführung der zu- und ablaufenden Abschnitte der Bildschleife (22) ausgebildet sind. Als Führungsmittel zur Führung eines Abschnitts der Bildschleife (22) in einer Ebene vor und parallel zu dem Bildfenster (14) kann beispielsweise ein im Gehäuse (2) gelagertes, mit der Perforation (38) des Endlos-Filmbandes in Eingriff stehendes Transportzahnrad (6) vorgesehen sein, das mit einem von einem Schaltwerk (21) betätigbaren Antriebsrad (36) drehfest verbunden ist.

Angegeben werden ferner Geräte für die lichtoptische Bildwiedergabe und -aufnahme unter Verwendung dieser Endlosbandkassette (1). Diese Geräte weisen jeweils eine von außen bedienbare Schaltvorrichtung zum bildweisen Transport des Endlosfilmbandes (4) auf.

Fig.1

EP 0 048 300 A1

Dieter W. Liedtke

Unterbösch, CH-6331 Hünenberg

Endlosbandkassette und Gerät für die lichtoptische Aufnahme
und/oder Wiedergabe von Einzelbildern unter Verwendung der
Endlosbandkassette

Die Erfindung betrifft eine Endlosbandkassette und ein
Gerät unter Verwendung der Endlosbandkassette für die
lichtoptische Aufnahme und/oder Wiedergabe von in Band-
Längsrichtung hintereinander angeordneten Einzelbildern.

Es gibt bereits bei Laufbildprojektoren Endlosbandkassetten,
welche den Vorteil einer hohen Bildkapazität mit demjenigen
der beliebigen Wiederholbarkeit der gesamten Bildfolge vereinigen (US-PS 3 817 610). Bei dieser bekannten Endlosbandkassette wird das Filmband außerhalb des Bildfensters mehrfach an diesem vorbeigeleitet, und ein Transportzahnrad
liegt in der Strahlenverlängerung des Bildfensters. Eine
Anordnung des Belichtungsstrahlengangs in Blickrichtung
ist daher bei dieser Kassettenausführung nicht zu realisieren, sondern das zugehörige Betrachtungsgerät bedarf
einer Eigenlichtquelle, deren Strahlengang in die Blickrichtung eingespiegelt werden muß. Außerdem ist die bekannte
Endlosbandkassette aufgrund ihrer Bandführung nur in relativ
groß bauenden Gehäusen und zugehörigen Wiedergabegeräten

Z/bu.

unterzubringen. Wegen der ungünstigen Filmschleifenführung
und der raumaufwendigen Kassettenform ist die Verwendung
des bekannten Projektionssystems auf Laufbildprojektoren
beschränkt.

Die Erfindung geht von der Erkenntnis aus, daß mit zunehmender Technisierung ein sehr weit gespannter Bedarf an
Bildinformationsspeichern mit einfachem Zugriff und beliebiger Wiederholbarkeit einer Folge von Einzelbildern
besteht, so z.B. als Betriebsanleitung technischer Geräte
im Haushalt und in Unternehmensbereichen, bei Kartenwiedergabegeräten zur Benutzung in Kraftfahrzeugen, Rufnummernanzeigern in Zuordnung zu häuslichen oder betrieblichen
Telefonsystemen, Aufnahme und Wiedergabe von Werbebildern,
Katalogen und Handelsinformationen, Aufnahme und Wiedergabe von Unterhaltungsbildern, Trainingsanweisungen,
Rezepten und Kochzeiten für den Haushalt usw..

Der Erfindung liegt die Aufgabe zugrunde, ein Bildwieder-
gabe- und Bildaufnahmesystem zur Verfügung zu stellen, bei
dem eine ein Endlosfilmband enthaltende, einfach aufgebaute Endlosbandkassette bei zahlreichen angepaßten Wiedergabe- und Aufnahmegeräten einsetzbar und problemlos austauschbar ist, damit der Bedarf an Bildinformation, insbesondere Einzelbildinformation bei extrem einfachem Zugriff mit optischen Mitteln umfassend befriedigt werden
kann.

Zu diesem Zweck schlägt die Erfindung eine Endlosbandkassette vor, die durch die folgenden Merkmale gekennzeichnet ist:

  a)  ein Endlosfilmband für die lichtoptische Aufnahme
      und/oder Wiedergabe von in Band-Längsrichtung hintereinander angeordneten Einzelbildern, vorzugsweise in Super-8-Format;

b) ein Gehäuse mit einer Vorratskammer, in der der
größte Teil des Endlos-Filmbands in mehreren
Lagen zu einer Rolle mit freiem Innenraum aufgewickelt ist und die Bildschleife des Filmbandes
innen und außen im wesentlichen tangential der
Rolle zugeführt bzw. von dieser abgeführt wird,
ferner mit einer neben der Vorratskammer gelegenen
Lichtdurchtrittskammer, die eine ein Bildfenster
begrenzende Außenwand und eine dieser gegenüberliegende und/oder seitliche Lichteintrittsöffnung
aufweist, und mit einer zwischen beiden Gehäusekammern gelegenen Trennwand, in der Durchgangsöffnungen zur Durchführung der zu- und ablaufenden
Abschnitte der Bildschleife ausgebildet sind;
und

c) Führungsmittel zur Führung eines Abschnitts der
Bildschleife in einer Ebene vor und parallel zu
dem Bildfenster.

Eine solche Endlosbandkassette läßt sich in extrem kompakter Bauweise mit einem Kunststoffgehäuse realisieren
und bildet somit einen extrem platzsparenden lichtoptischen Bildspeicher, der ohne den bei üblichen Kassetten
mit offenen Filmbändern erforderlichen Bedienungsaufwand
mit Umlegen oder Rückspulen des Filmbands einen raschen
Zugriff und eine beliebige Wiederholung der Bildfolge
ermöglicht. Da die geschlossene Bildschleife bei der erfindungsgemäßen Endlosbandkassette bis in den Bildfensterbereich im Kasseteninnenraum geführt ist, entfallen die
bei bekannten Bildkassetten auftretenden und bei laienhafter Benutzung schwerwiegenden Probleme der Filmschleifeneinführung in ein zugehöriges Bildwiedergabe- bzw. Bildaufnahmegerät.

Eine besonders zuverlässige und genaue Ausrichtung der
Bildfelder auf dem Endlosband in Bezug auf das Bildfenster
in der Endlosbandkassette läßt sich in Weiterbildung der
Erfindung dadurch erreichen, daß das Endlosband eine
parallel zu der Reihe von Einzelbildern in Längsrichtung
verlaufende Perforationsreihe hat und daß in der Lichtdurchtrittskammer eine formschlüssig in die Perforationen
eingreifende Transportvorrichtung zum Transport des Endlosbandes um jeweils einen Bildschritt vorgesehen ist.
Die Transportvorrichtung weist dabei vorzugsweise ein
parallel zurBand-Wickelachse drehbar gelagertes, mit der
Perforation in Eingriff stehendes Transportzahnrad und
ein mit diesem über eine Lagerwelle drehfest verbundenes,
durch einen Auslösemechanismus betätigbares Antriebselement
auf. Aufgrund des formschlüssigen Eingriffs des Transportzahnrades in die Perforation ist die Lage der Perforation
bzw. des Bildfeldes in Bezug auf das Bildfenster einer
bestimmten Stellung des von der Kassettenaußenseite aus
zugänglichen Antriebselements genau zugeordnet. Auf diese
Weise ist es möglich, die Schaltschritte zum Weitertransport des Endlosbandes jeweils um ein Bildfeld genau
zu bemessen.

In einer bevorzugten Ausführung ist die Endlosbandkassette
so ausgebildet, daß das Gehäuse ein zweiteiliger Spritzist
gußformteil/mit einem die Trennwand zwischen den beiden
Kammern bildenden plattenförmigen Mittelteil, einem als
geschlossene Haube ausgebildeten ersten Außenbauteil, das
gemeinsam mit dem plattenförmigen Mittelteil die Vorratskammer begrenzt und einem auf der anderen Seite des plattenförmigen Mittelteils angeordneten zweiten Außenteil, das
gemeinsam mit dem Mittelteil einen Lichteinfallschacht begrenzt, wobei im plattenförmigen Mittelteil zwei schlitzartige Durchtrittsöffnungen zum Zu- und Ablauf der Bildschleife ausgebildet sind. Eine in dieser Weise ausgebildete Endlosbandkassette ist besonders billig herstellbar, da das Gehäuse aus drei hinterschneidungsfrei ausgebildeten einzelnen Spritzgußformteilen besteht. Dabei
sollte das Gehäuse an zwei entgegengesetzten Außenwänden
unterschiedliche Breitenabmessungen haben, wodurch erreicht
wird, daß die Kassette beim Einsetzen in einen geeignet
profilierten Schacht eines Bildaufnahme- bzw. Bildwiedergabegeräts eine stets seitenrichtige Lage erhält.

Um die auf dem Endlosband befindliche optische Information
geeignet katalogisieren und zugreifen zu können, ist in
Weiterbildung der Erfindung vorgesehen, daß auf dem Endlosband eine parallel zur Bildreihe in Längsrichtung verlaufende kodierbare Befehlsspur zum Anwählen der Einzelbilder angeordnet ist, die durch neben dem Bildfenster angeordnete Mittel bildweise abtastbar ist.

Das Gerät für die lichtoptische Bildwiedergabe unter Verwendung der erfindungsgemäßen Endlosbandkassette, deren
auf dem Filmband angeordneten Bilder mit Licht von einer
Lichtquelle durchstrahlt und am Einblick sichtbar gemacht
werden, zeichnet sich dadurch aus, daß in einem Gerätegehäuse im Strahlengang zwischen einer Betrachtungsebene
und dem Einblick ein optisches Vergrößerungssystem angeordnet ist, das ein in der Betrachtungsebene gelegenes
Bild in der Einblickebene vergrößert abbildet, daß im
Bereich der Betrachtungsebene eine Ausnehmung zur Aufnahme
der Endlosbandkassette ausgebildet ist und Mittel zum lösbaren Festlegen der Endlosbandkassette in der Ausnehmung
vorgesehen sind, wobei das Bildfenster der Endlosbandkassette
mit dem Lichtstrahlengang ausgerichtet ist, und daß eine
eine Transportvorrichtung zum bildweisen Fortschalten des

0048300

Filmbandes betätigende Schaltvorrichtung von außen bedienbar am Gerätegehäuse angeordnet ist.

Bei einem nach dem Durchstrahlprinzip arbeitenden Gerät
dieser Art ist vorzugsweise vorgesehen, daß ein Strahlenteiler in Lichteinfallrichtung hinter der Betrachtungsebene im Gerätegehäuse angeordnet ist, der den Strahlengang des durch das Bildfenster in das Gerätegehäuse einfallenden Lichts in zwei getrennte Strahlengänge teilt und
daß die geteilten Strahlengänge nach Faltung an jeweils
wenigstens einer Spiegelfläche in einen zweiäugigen Einblick gerichtet werden.

In alternativer Ausbildung des Geräts ist vorgesehen, daß
der Einblick als in das Gerätegehäuse integrierter Rückwärtsprojektionsschirm ausgebildet ist, auf dem ein über
die Vergrößerungsoptik vergrößertes Bild aus der Betrachtungsebene mit einer geräteeigenen Lichtquelle abbildbar
ist. Dieses Gerät mit Rückwärtsprojektionsschirm eignet
sich besonders als Bildinformationsgeber im Haushalt,
als Bordgerät in Kraftfahrzeugen zur Sichtbarmachung verschiedener Landkarten; als Rufnummern- oder Karteigeber
im Betrieb oder in Zuordnung zu besonderen Betriebsanlagen zur Sichtbarmachung von Wartungsanweisungen. Das
prinzipiell gleiche Gerät läßt sich für alle vorgenannten
Anwendungen benutzen, wobei jeweils eine für die Anwendung
spezifische Endlosbandkassette mit der benötigten Einzelbildfolge in das Gerät  bzw. den Lichtstrahlengang eingesetzt wird. Zur Vereinfachung des Zugriffs ist dabei in
Weiterbildung der Erfindung vorgesehen, daß der Schaltvorrichtung eine Eingabetastatur zur Auswahl eines bestimmten Bildes der auf dem Endlosband aufgezeichneten
Bildfolge und/oder zur Wiedergabe aufeinanderfolgender Einzelbilder zugeordnet ist, daß ein Code-Lesegerät, das einen
die Codespur des Endlosbandes abtastenden Abtastkopf aufweist, mit einem einen Programmspeicher  enthaltenden Prozessor verbunden ist, der einen über die Eingabetastatur
eingegebenen Code mit dem vom Lesegerät abgetasteten Einzelbildcode vergleicht und nach Maßgabe dieses Vergleichs entweder die Transportvorrichtung weiterschaltet oder eine Wiedergabe des dem abgetasteten Code zugeordneten Bildes bei gesperrter Transportvorrichtung bewirkt.

Die grundsätzlich gleiche und kompakte Bildkassette kann
mit einem unbelichteten Film auch als Kompaktfilmkassette
in einem Bildaufnahmegerät verwendet werden. Dieses Bildaufnahmegerät hat dabei einen Kassetten-Aufnahmeschacht,
der hinter einem Aufnahmeobjektiv und dem Verschlußteil
der Kamera so angeordnet ist, daß das Bildfenster der in
den Schacht eingesetzten Endlosbandkassette im Belichtungsstrahlengang hinter dem Verschluß liegt. Ein gegebenenfalls motorischer Schrittschaltantrieb, der einzeln durch
einen Auslöser betätigbar ist, greift mit einer Antriebsvorrichtung an das in der Kassette befindliche Filmband
an und sorgt für dessen bildweise Weiterschaltung. Bei
Verwendung eines Super-8-Filmbandes reicht eine Endlosbandkassette mit einem Bauvolumen von wenigen cm$^3$ für
die Erfassung von beispielsweise 400 Bildern aus.

Einer solchen Bild-Aufnahmekamera kann ein binokulares
Betrachtungssystem zugeordnet sein, das bei der Aufnahme eines Motivs dessen räumliches Erscheinungsbild
für den Fotografierenden wesentlich besser erkennbar
macht.

Als Transportvorrichtung zum bildweisen Fortschalten
des endlosen Filmbandes kann eine im Bildwiedergabe- bzw.
Bildaufnahmegerät angeordnete Greifervorrichtung, ein
Schrittschaltwerk mit einem Malteserkreuz, eine Klinkenschaltvorrichtung oder eine als Winder bekannte motorische
Schaltvorrichtung in das Bildwiedergabe- bzw. Bildaufnahmegerät eingebaut sein. Um zu gewährleisten, daß bei jeder Bildwiedergabe bzw. Aufnahme das Bildfeld auf dem Filmband genau mit dem Bildfenster in einer Außenwand der Endlos- kassarte ausgerichtet ist, sollte in der Endlosbandkassette eine mit den Perforationen zusammenwirkende Rastvorrichtung vorgesehen sein, welche die richtige Relativlage zwischen den Bildfeldern und dem Bildfenster vor und nach jedem Bildschaltschritt aufrechterhält.

Im folgenden wird die Erfindung anhand von in der Zeichnung schematisch dargestellten Ausführungsbeispielen näher erläutert. Auf die in der Zeichnung dargestellten Ausführungsbeispiele ist die Erfindung jedoch nicht beschränkt; vielmehr gilt für das Wesen der Erfindung der Umfang der beigefügten Ansprüche. In der Zeichnung zeigen:

Fig. 1. eine schematische Schnittansicht in ver- größertem Maßstab auf eine Endlosband- kassette mit eingelegtem Endlosfilmband, wobei die Schnittführung etwa entlang der Linie I-I in Figur 2 verläuft;

Fig. 2 eine Schnittansicht entlang der Linie II-II der Figur 1;

Fig. 3 eine Schnittansicht entlang der Linie III-III in Figur 2;

Fig. 4 eine schematische Darstellung auf den Innenraum eines Geräts zur lichtoptischen Wiedergabe von Einzelbildern nach dem Durchstrahlungsprinzip mit einer als Bildträger dienenden eingesetzten Endlosbandkassette;

Fig. 5 ein schematisch dargestelltes Ausführungs- beispiel eines Schrittschaltwerks zum schritt- weisen Weiterschalten des Filmbandes, wobei das letzte Getriebeglied ein in der Endlosbandkassette entsprechend der Darstellung in den Figuren 1 bis 3 integriertes Transportzahnrad ist;

Fig. 6 eine ebenfalls schematische Darstellung
eines anderen mechanischen Filmschaltwerks
unter Verwendung einer im Gerät außerhalb
der Endlosbandkassette gelagerten Greifervorrichtung;

Fig. 7 eine schematische Innenansicht auf eine
Einzelbildkamera zur Bildaufnahme auf einem
in einer Endlosbandkassette befindlichen
Filmband;

Fig. 8 eine schematische Ansicht auf ein nach dem
Prinzip der Rückwärtsprojektion arbeitendes
lichtoptisches Bildwiedergabegerät mit einer
als Informationsträger dienenden Endlosbandkassette;

Fig. 9 eine Ansicht in einer zur Darstellung in Fig.
8 rechtwinkligen Vertikalebene zur Darstellung
des Lichtstrahlengangs zwischen dem Bildfenster
und einem Rückwertsprojektionsschirm;

Fig. 10 eine Frontansicht auf das in den Figuren 8
und 9 dargestellte Gerät mit einer Eingabetastatur zum Fortschalten und Anwählen von
wiederzugebenden Einzelbildern;

Fig. 11 ein Blockschaltbild einer Anordnung zur
Verarbeitung von über die Eingabetastatur
eingegebenen Befehlen und zum Steuern der
Filmband-Transportvorrichtung für den Zugriff zu Einzelbildern, wobei ein Filmband
mit einer Befehlcodespur verwendet wird; und

Fig. 12 ein Operationsablaufsdiagramm bei der Eingabe zum Zugriff zu einem bestimmten Bild
der auf dem Endlosfilmband angeordneten
Bildfolge.

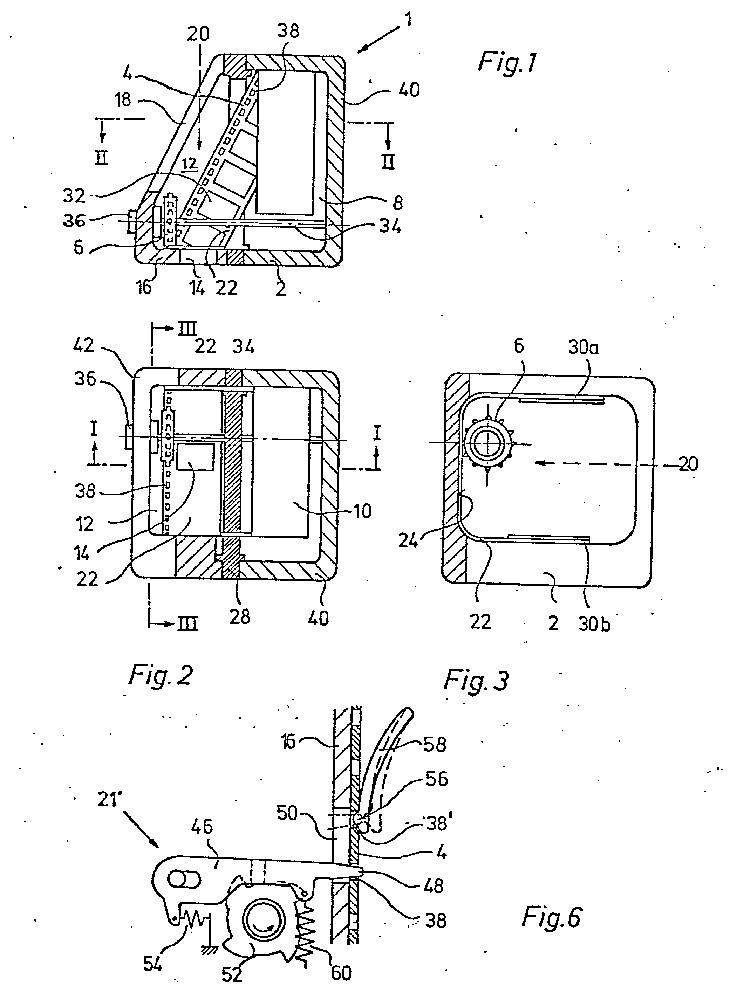

In den Figuren 1 bis 3 ist schematisch und in vergrößertem
Maßstab eine Endlosbandkassette 1 mit einem aus kunststoffgespritzten, dreiteiligen Gehäuse 2 dargestellt, in welchem ein Endlosfilmband 4 angeordnet und ein das letzte Getriebeglied einer weiter unten noch genauer beschriebenen Transportvorrichtung zum bildweisen Fortschalten des Filmbandes 4
bildendes Transportrad 6 gelagert ist. Das Gehäuse umschließt eine Vorratskammer 8, in der der größte Teil des
Endlosfilmbandes 4 in mehreren Lagen zu einer Rolle 10 aufgewickelt ist, sowie den größten Teil einer neben der Vorratskammer 8 gelegenen Lichtdurchtrittskammer 12. Letztere weist
eine ein Bildfenster 14 begrenzende Außenwand 16 und eine
dieser gegenüberliegende, auch seitlich nach außen offene
Lichteintrittsöffnung 18 auf. Das für die Betrachtung
eines Einzelbildes erforderliche Beleuchtungslicht tritt
beispielsweise in Richtung des Pfeils 20 in die Lichteintrittsöffnung  18 ein und wird entlang einer geraden Bahn direkt durch das Bildfenster 14 in den Betrachtungsstrahlengang eines Betrachtungsgeräts geworfen. Anstelle der geradlinigen Durchstrahlung der Lichtdurchtrittskammer in Richtung des Pfeils 20 kann es für verschiedene Anwendungsfälle auch zweckmäßig sein, in der Lichtdurchtrittskammer 12 einen unter 45$^{\circ}$ zur Ebene des Bildfensters 14
geneigten Umlenkspiegel anzuordnen, der von der Seite her
in die Lichtdurchtrittskammer einfallendes Licht normal
zur Bildfensterebene umlenkt.

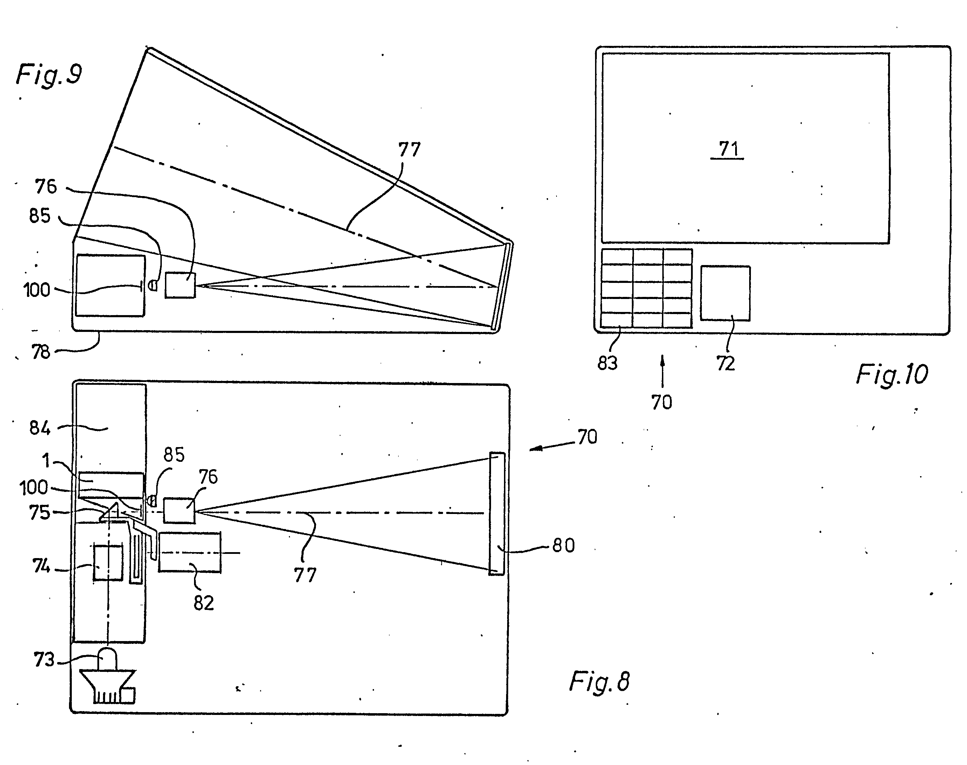

Ein Abschnitt einer der Rolle 10 innen und außen im wesentlichen tangential zugeführten bzw. von dieser abgeführten Bildschleife 22 ist so geführt, daß er an der Innenseite 24 der
Außenwand 16 in einer Ebene unmittelbar vor und parallel zum
Bildfenster 14 verläuft. Die beiden Kammern 8 und 12 sind
durch eine im wesentlichen ebene Trennwand 28 begrenzt,
in welcher zwei schlitzartige Durchtrittsöffnungen 30a  und
30b  zum Zu- und Ablauf der Bildschleife 22 ausgebildet sind.
Die Bildschleife 22 wird in der Lichtdurchtrittskammer 12
am oberen bzw. unteren Ende der Innenseite 24 der Außenwand 16 über einen geeigneten Radius rechtwinklig umgelenkt und von dem Transportzahnrad 6 in der Betrachtungsebene vor dem Bildfenster 14 gehalten. Das in das Gehäuse 2 integrierte Transportzahnrad 6 hat neben der Unterstützung der genauen Führung der Bildschleife in der Betrachtungsebene an der Innenseite 24 der Wand 16 noch den weiteren Vorteil, daß mit seiner Hilfe die Bildschleife am Ende jedes Schaltschritts ausreichend zuverlässig in einer solchen Sollage vor dem Bildfenster 14 gehalten wird, daß eines der in Figur 1 schematisch dargestellten Bildfelder 32 mit dem Bildfenster 14 ausgerichtet ist. Die Festlegung des Transportzahnrads 6 in der Sollage zwischen zwei Schaltschritten und damit die Festlegung der Bildschleife 22 kann entweder durch eine auf das Transportzahnrad 6, dessen Lagerwelle 34 oder auch ein eine Außenwand des Gehäuses 2 durchgreifendes Getriebeglied 36 wirkende Rastvorrichtung erfolgen. Andererseits kann es zweckmäßig sein, die Bildschleife 22 in der Lichtdurchtrittskammer 12 entsprechend der Darstellung in Figur 6 durch eine am Gehäuse 2 federnd befestigte Rastnase festzulegen, die in der Sollstellung der Bildschleife 22 in eine Perforation einer in Filmbandlängsrichtung verlaufenden Perforationsreihe 38 eingreift.

Das Gehäuse 2 ist in dem in den Figuren 1 bis 3 dargestellten Ausführungsbeispiel als dreiteiliger Spritzgußformteil ausgebildet und weist einen die Trennwand zwischen den beiden Kammern 8 und 12 bildenden plattenförmigen Mittelteil 28, einen als geschlossene Haube ausgebildeten ersten Außenbauteil, der gemeinsam mit dem plattenförmigen Mittelteil die Vorratskammer 8 begrenzt, und einen auf der anderen Seite des plattenförmigen Mittelteils 28 angeordneten zweiten Außenteil 42 auf. Letzterer begrenzt gemeinsam mit dem Mittelteil 28 die Lichtdurchtrittskammer 12. Am Umfang des die Trennwand bildenden Mittelteils 28 ist das Gehäuse von vier rechtwinklig zueinander verlaufenden Außenwänden begrenzt.
Die Vorratskammer hat eine der Trennwand 28 gegenüberliegende,
zu diesen vier Außenwänden rechtwinklig verlaufende weitere
Außenwand. Die Lichtdurchtrittskammer· hat an der der Trennwand 28 gegenüberliegenden Seite einen schräg verlaufenden
Wandabschnitt, dessen Neigung zur Trennwand 28 so gewählt
ist, daß die das Bildfenster enthaltende Außenwand 16 der
Lichtdurchtrittskammer 12 breiter ist als die dem Bildfenster
14 entgegengesetzte Seite der Lichtdurchtrittskammer.· Diese
schräge Außenwand des Gehäuses 2 gewährleistet insbesondere
in Verbindung mit einem entsprechend profilierten Aufnahmeschacht in einem Bildwiedergabe- oder Bildaufnahmegerät
eine stets seitenrichtige Einordnung der Endlosbandkassette
und ermöglicht eine relativ große Lichteintrittsöffnung 18.
Bei entsprechender Gestaltung des Aufnahmeschachts in dem
Bildaufnahme- bzw. Bildwiedergabegerät ist die Bildkassette daher auch ohne besondere Festlegungsmittel formschlüssig in der Sollage gehalten.

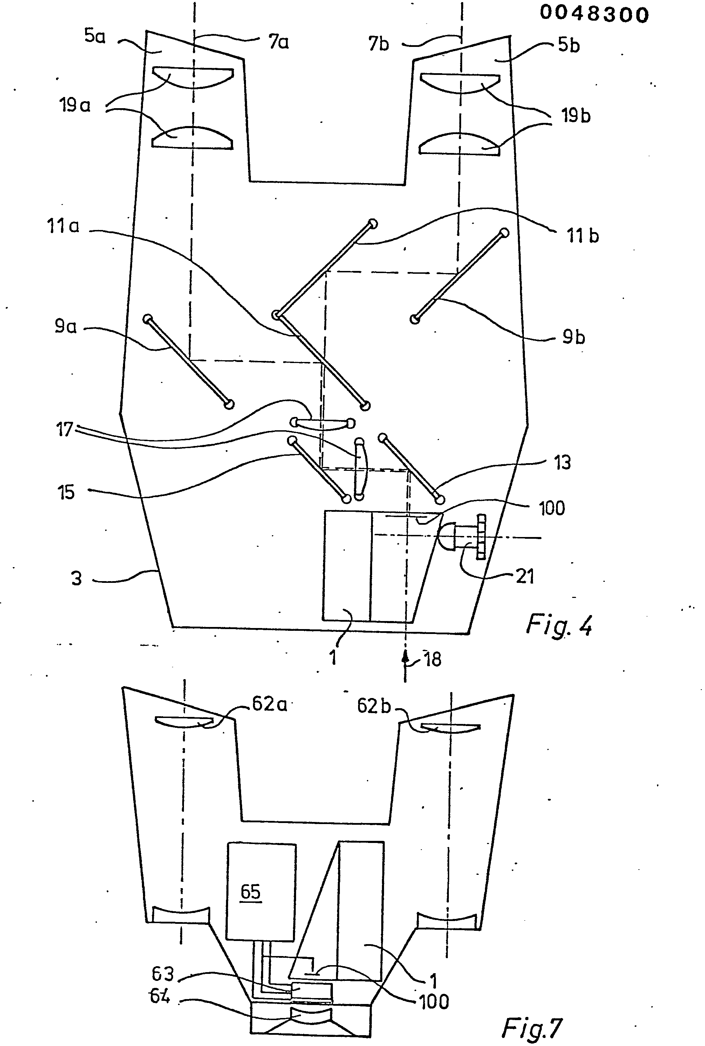

In Fig. 4 ist eine schematische Ansicht auf ein besonders
einfach aufgebautes Gerät zur Einzelbildwiedergabe unter
Verwendung der zuvor beschriebenen Endlosbandkassette 1
dargestellt. Die Endlosbandkassette 1 ist in dem Gerätegehäuse 3 beispielsweise in einem in der Zeichnung nicht
dargestellten Aufnahmeschacht im Bereich des ausblickseitigen Gehäuseendes angeordnet. Das Gerät verfügt über
einen zweiäugigen Einblick 5a, 5b, dessen strichpunktiert
dargestellten Betrachtungsstrahlengänge 7a, 7b durch zwei
Spiegelpaare 9a, 11a und 9b, 11b in einem gemeinsamen
Betrachtungsstrahlengang zusammengeführt werden. Der Spiegel
11a ist teildurchlässig ausgebildet, so daß die in Lichteinfallrichtung 18 einfallenden Beleuchtungsstrahlen nach
Umlenkung an Spiegeln 13 und 15 und Durchtritt durch eine
geeignete Vergrößerungsoptik 17 durch den teildurchlässigen Spiegel 11a in die beiden Strahlengänge 7a und 7b bei gleicher
Lichtstärke aufgespalten werden. Zu diesem Zweck ist der
Spiegel 11a und ebenso die übrigen Spiegel unter 45° zur
jeweiligen Lichteinfallrichtung geneigt angeordnet. Aufgrund der Umlenkung des gemeinsamen Strahlengangs durch
die Spiegel 13 und 15 wird der Strahlengang bei sonst
relativ kleinbauendem Gerät in einer für die verzerrungsfreie Wiedergabe zweckmäßigen Weise verlängert. Im Bereich
des Einblicks sind den beiden Strahlengängen optische
Elemente in Form von Kunststofflinsen  19a und 19b eingesetzt.

Das Weiterschalten des in der Endlosbandkassette 1 befindlichen Filmbandes erfolgt über eine in Figur 4
schematisch dargestellte Transportvorrichtung 21, die
entweder direkt auf die Bildschleife wirkt oder bei einer
Kassette der in den Figuren 1 bis 3 dargestellten Ausbildung mit dem von außen zugänglichen Getriebeglied 36 der
Schaltvorrichtung gekoppelt ist. Die Transportvorrichtung
wird über einen von der Außenseite des Gehäuses 3 zugänglichen
Hebel oder Tastknopf jeweils zum schrittweisen Fortschalten
des Filmbandes  um ein Bildfeld betätigt.

Ein besonderer Vorteil der in Fig. 4 dargestellten Ausbildung des Bildwiedergabegeräts besteht darin, daß die
Bildbetrachtung von einem Filmband beispielsweise im
Super-8-Format stark vergrößert (durch die optischen
Elemente 17 und 19) in dem zweiäugigen Einblick 5a und
5b erscheint, wobei ein stereoskopischer Effekt erzielt
wird, der die Bildbetrachtung wesentlich eindrucksvoller
macht. Das Gehäuse 3 kann als einfaches Spritzgußteil ausgebildet sein und trägt daher nicht wesentlich zu den
Gesamtkosten des Geräts bei.

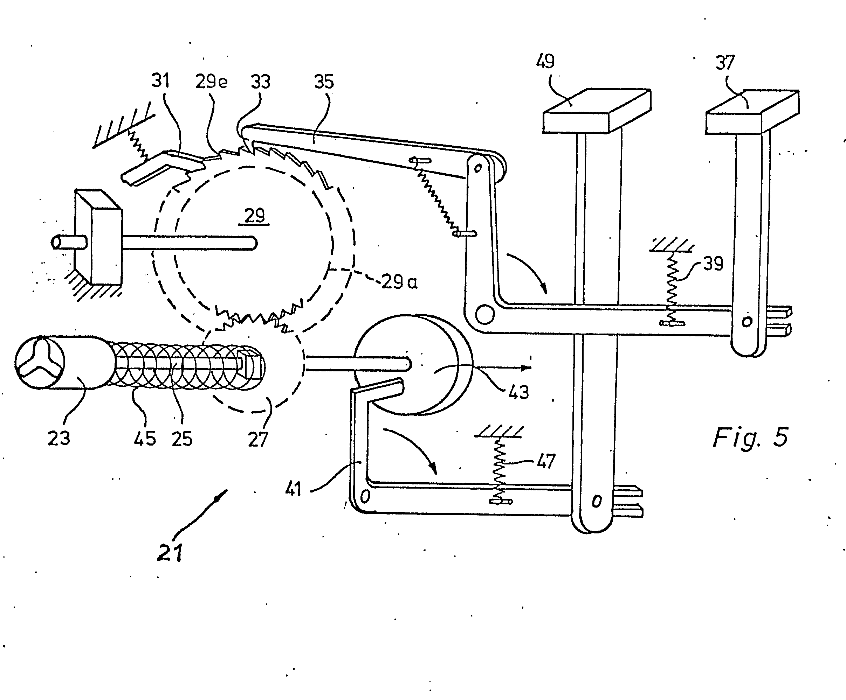

In Fig. 5 ist ein Ausführungsbeispiel einer mechanischen Transportvorrichtung 21 zum bildweisen Transport des in
einer Endlosbandkassette 1 angeordneten Filmbandes dargestellt. Die Transportvorrichtung 21 ist im Wiedergabe- bzw.
Aufnahmegerät angeordnet und über einen Kupplungskopf 23
mit einem von der Außenseite des Kassettengehäuses zugänglichen Kupplungsteil 36 (Fig. 2) formschlüssig kuppelbar.
Das Kupplungsteil 36 ist in der anhand von Fig. 2 erläuterten Weise mit dem Transportzahnrad 6 drehfest verbunden,
so daß einer Drehbewegung des Kupplungsteils 36 eine
Weiterschaltung des in Fig. 5 nicht sichtbaren Filmbandes
um ein dem Drehwinkel entsprechendes Maß zugeordnet ist.

Der Kupplungskopf 23 ist fest mit einer im Gerätegehäuse
drehbar und axial verschieblich gelagerten Antriebswelle
25 verbunden. Ein Zahnrad 27, das durch in der Zeichnung
nicht dargestellte geeignete Mittel in Axialrichtung im
Gerätegehäuse festgelegt und auf der Antriebswelle 25 drehfest, jedoch axial verschiebbar gelagert ist, überträgt die
von einem Schrittschaltwerk erzeugte Drehbewegung auf den
Kupplungskopf 23. Das Zahnrad 27 steht mit einem Zahnkranz
29a eines Klinkenrades 29 in Eingriff. Letzteres weist
einen Klinkenradkranz 29e auf, in dessen Zähne einerseits
eine federbelastete Sperrklinke 31 und andererseits eine
drucktasterbetätigte Zahnklinke 33 eingreifen. Die Zahnklinke 33 ist am freien Ende eines Hebeltriebes 35 angeordnet, zu der ein von einer Drucktaste 37 entgegen der Rückstellkraft einer Feder 39 in Richtung des dargestellten
Pfeils schwenkbarer Doppelhebel gehört. Beim Niederdrücken
der Drucktaste 37 bis zu einem in der Zeichnung nicht dargestellten Anschlag schwenkt der zweiarmige Hebel und nimmt
dabei die Zahnklinke 33 sowie über den Zahnkranz 29e das
Klinkenrad 29 in Schwenkrichtung mit. Die Sperrklinke läuft
beim schrittweisen Weiterschalten über die/Zahnflanke ab
und fällt unter Einfluß der sie belastenden Druckfeder in
die nächste Zahnvertiefung ein. Sobald die Drucktaste 37 entlastet wird, läuft auch die Zahnklinke 33 unter Einfluß der den Hebeltrieb 35 zurückstellenden Feder 39 über
die flache Zahnflanke in die in Fig. 5 dargestellte Lage
zurück und fällt in die nächstfolgende Zahnvertiefung ein.
Die Drehung des Klinkenrades 29 um einen Zahn entspricht
einer Drehung des Zahnrads 27 und des mit diesem drehfest
verbundenen Kupplungsrades 23 um einen solchen Drehwinkel,
daß das Film-band um ein Bildfeld (32, Fig. 1) fortgeschaltet wird. Der Schwenkhub bei Betätigung der Drucktaste 37 kann auch so bemessen sein, daß das Klinkenrad 29
jeweils um zwei oder mehr Zähne fortgeschaltet wird.
Wesentlich ist, daß bei jeder Betätigung unter Drehung des
formschlüssig in den Kupplungsteil 36 der Endlosbandkassette
1 eingreifenden Kupplungskopfes 23 das Filmband um ein Bildfeld fortgeschaltet wird. Ein kurzer Schwenkhub verbunden
mit kurzer Teilung der Zahnschritte an dem Klinkenrad 29
hat den Vorteil, daß anstelle des über eine Drucktaste 37
manuell betätigten Schrittschaltantriebs ein magnetischer
Antrieb vorgesehen werden kann, bei dem (in der Zeichnung
nicht dargestellt) das gabelförmige Antriebsende des Hebetriebs 35 entgegen der Rückstellkraft der Zugfeder 39 von
einem Magnetanker betätigt wird. Dieser Magnetanker kann
von einem Elektromagneten gesteuert werden, der selbst entweder mit einem elektrischen Einzelsignal oder mit einer vorgegebenen Folgefrequenz getastet wird, um den Kupplungskopf
23 und damit das von diesem getriebene Filmband in Art eines
Laufbildtransports mit der vorgegebenen, beispielsweise
Super-8-Laufbildgeschwindigkeit fortzuschalten.

Um der Kupplungskopf 23 beim Einsetzen und Auswechseln der
Endlosbandkassette 1 aus dem formschlüssigen Eingriff mit
dem Kupplungsteil 36 (Fig. 1) axial entkuppeln zu können,
ist die Lagerwelle 25 in Richtung des Pfeils axial verschieblich angeordnet. Ein Doppelhebel 41, der über eine Schwenkachse am Gerätegehäuse gelagert ist, greift mit seinem freien
Ende an einer mit der Antriebswelle 25 axial fest verbundenen
Druckplatte 43 an. Eine Druckfeder 45 ist zwischen dem axial am Gerät festgelegten Zahnrad 27 und dem Kupplungskopf 23
verspannt und drängt den Kupplungskopf 23 mit der Antriebswelle 25 und der Druckplatte 43 in der Darstellung
gemäß Fig. 5 nach links (entgegen der Richtung des
axialen Pfeils). Wenn der Doppelhebel 41 entgegen der
Rückstellkraft einer Zugfeder 47 über eine von der Geräteaußenseite betätigbare Drucktaste 49 um das gerätefeste
Schwenklager in Richtung des Pfeils geschwenkt wird, so
drängt das freie Ende des Doppelhebels 41 die Druckplatte
43 in Richtung des axialen Pfeils soweit nach rechts in
Fig. 5, daß der Kupplungskopf23 gegenüber dem Kupplungsteil
36 (Fig. 1) der in das Gerät eingesetzten Endlosbandkassette
1 zurückgezogen wird. Sobald die Drucktaste 49 freigegeben
wird, wird der Doppelhebel 41 von der Rückstellfeder 47
wieder in die in Fig. 5 dargestellte Stellung zurückgezogen.
Die Rückholbewegung des Doppelhebels 41 ist in geeigneter
Weise beispielsweise durch einen Anschlag begrenzt.

Anstelle der schwenkbaren Hebelanordnung 35 kann zur Betätigung der in den Klinkenzahnkranz 29e eingreifenden
Schaltklinke 33 auch ein etwa tangential zum Umfang des
Klinkenrads 29 beweglicher Schieber vorgesehen sein, der
mit einem von der Geräteaußenseite zugänglichen Schubstück
gekuppelt ist. Das Schubstück kann entgegen der Wirkung
einer Feder soweit verschoben werden, daß das Klinkenrad
29 von der federnd mit dem Klinkenzahnkranz 29e in Eingriff
gehaltenen Schaltklinke um einen vorgegebenen Schaltschritt
gedreht wird.

Das Kupplungsteil 36 kann außerdem als Malteserkreuz ausgebildet sein, das in bekannter Weise mit einer am Wiedergabe bzw. Aufnahmegerät gegebenenfalls axial verschieblich
gelagerten Sperr- oder Stiftscheibe zusammenwirkt, wobei
der Drehantrieb der Sperr- oder Stiftscheibe entweder von
einem handbetätigten Auslöser oder - insbesondere als sogenannter Laufbildantrieb - von einem Elektromotor abgeleitet
ist.

Anders als bei den zuvor beschriebenen Ausführungsbeispielen, bei denen ein in der Endlosbandkassette integriertes Transportzahnrad 6 das letzte Getriebeglied der
Transportvorrichtung bzw. des Schaltwerks bildet, wird
bei dem Ausführungsbeispiel gemäß Fig. 6 der schrittweise Transport des Filmbandes 4 mit Hilfe einer geräteseitigen Greiferanordnung 21' bewirkt, die mit einem
Greiffinger 48 ein neben dem Bildfenster 14 in der Außenwand
16 angeordnetes Langloch 50 durchgreift und in ein
Perforationsloch 38 der Filmschleife 4 eingreift.

Eine in bekannter Weise ausgebildete Schaltwalze 52
drängt den Greifer 46 entgegen der Vorspannung einer
Feder 54 aus dem Eingriff mit dem Perforationsloch 38
zurück und hebt ihn in eine obere Endstellung, bei der
der Greiferfinger 48 einem anderen, um die Breite eines
Bildfeldes, einschließlich Bildsteg von dem Perforationsloch 38 entfernten Perforationsloch 38' gegenüberliegt.
Diese in der Zeichnung gestrichelt dargestellte Stellung des
Greifers 46 entspricht dem Zustand der Transportvorrichtung vor Beginn des Transportschritts, also dem
Zustand, bei dem ein Bildfeld (32, Fig. 1) dem Bildfenster 14 in der Betrachtungsebene genau gegenüberliegt.
Diese Sollstellung wird bei dem in Fig. 6 dargestellten
Ausführungsbeispiel durch eine in das obere Perforationsloch 38 eingreifende Rastnase 56 gesichert, die an einem mit dem Gehäuse 2 der Kassette 1 verbundenen Federarm 58 angeordnet ist.

Bei Beginn der Transportbewegung des Filmbandes 4 wird die Greiferanordnung 21' mit dem Greiferfinger 48 durch das Langloch 50 in das obere Perforationsloch 38' eingerückt und drängt dadurch die Rastnase 56 zurück in den Kasetteninnenraum. Das Filmband wird dadurch entsperrt, und, unter Einwirkung der Zugfeder 60 schaltet der Greifer 46 das Filmband 4 um den vorgesehenen Schaltschritt (in der Zeichnung nach unten) weiter. Bei Erreichen der unteren Endlage fällt die Rastnase 56 in eine nachfolgende Perforation und sichert auf diese Weise erneut das Filmband 4 in der vorgesehenen Sollage.

Anstelle der in Fig. 6 dargestellten Greiferanordnung können auch andere bekannte, nach dem Greiferprinzip arbeitende Schaltwerke verwendet werden; für die Zwecke der Erfindung ist die in der Sollage des Filmbandes 4 wirksame, kassettenseitige Rastnase 56 von Bedeutung, die das Filmband auch dann in der Sollstellung hält, wenn die Endlosbandkassette 1 dem zugehörigen Wiedergabe- bzw. Aufnahmegerät entnommen ist.

In Fig. 7 ist ein Bildaufnahmegerät, also eine Aufnahme-kamera zur Belichtung eines in der beschriebenen Endlos-bandkassette 1 befindlichen (unbelichteten) Filmbandes schematisch dargestellt. Wie selbst aus dieser schematischen Darstellung zu erkennen ist, kann das Bauvolumen auch der Aufnahmekamera selbst bei Verwendung des zweiäugigen Betrachtungssystems 62a und 62b sehr klein gehalten werden, da die in natürlicher Größe dargestellte Endlosbandkassette 1 einen vergleichsweise sehr geringen Platzbedarf im Kamera-körper hat.

0048300

Ähnlich bekannten Kameraausführungen sind vor der vom
Bildfenster 14 des Kassettengehäuses 2 begrenzten Filmebene 100 ein schematisch dargestellter Verschluß 63 und
ein Objektiv 64 angeordnet. Eine vorzugsweise motorische
Filmtransportvorrichtung, die beispielsweise ähnlich bekannten Windern ausgebildet sein kann, ist über das
kassettenseitige Kupplungsglied mit dem Transportzahnrad 6 gekuppelt und sorgt nach der Belichtung für den
bildweisen Transport des Endlosbandes 4.

Anstelle des zweiäugigen Betrachtungssystems mit zwei
getrennten Strahlengängen kann ein binokulares Betrachtungssystem bei der in Fig. 7 dargestellten Kamera verwendet werden, dessen beiden Strahlengänge über eine
Spiegel- oder Prismenanordnung ähnlich derjenigen gemäß
Fig. 4 in einer gemeinsamen Sucheroptik zusammengeführt
sind.

In den Figuren 8 bis 10 ist ein Bildwiedergabegerät 70
für eine Endlosbandkassette 1 der beschriebenen Art
schematisch dargestellt. Bei diesem Gerät wird das zu
betrachtende Bild auf einen Rückwärtsprojektionsschirm
71 geworfen, der den überwiegenden Teil der Frontseite
des Geräts einnimmt. Dieses Gerät ermöglicht eine starkvergrößerte Darstellung des in der Bildebene 100 vor dem
Bildfenster der Kassette befindlichen Super-8-Bildes
bei außerordentlich kompakter Bauweise.

Das Gerät 70 wird durch eine frontseitige, rechteckige
Aufnahmeöffnung 72 (Fig. 10) mit der Kassette 1 geladen.
Licht von einer geräteseitigen Lichtquelle 73 wird über
einen Kondensor 74 und eine in der Lichtdurchtrittskammer angeordnete oder in diese eingerückte vollverspiegelte Fläche 75 durch das zu beobachtende Bild und
das mit diesem ausgerichtete Bildfenster (14, Fig. 1)
gerichtet. Durch eine geeignete Optik 76 wird das die

0048300

Bildebene durchstrahlende Licht entlang einer Strahlenachse 77 auf einem vor der Rückwand des Gerätegehäuses 78 gelegenen Spiegel 80 gerichtet und von diesem aus auf den Rückwärtsprojektionsschirm 71 geworfen. Die Vergrößerung ist so gewählt, daß das Bild aus der Filmebene in der Kassette etwa die Gesamtgröße des Rückwärtsprojektionsschirms 71 einnimmt. Wegen der geringen Baugröße und dem relativ großen Bildschirm eignet sich das Wiedergabegerät 70 besonders als Sichtgerät zur Anzeige von Einzelbildern für den häuslichen und geschäftlichen Gebrauch, aber auch als Sichtgerät zur Anzeige von Landkartenzonen in Fahrzeugen.

Der Umlenkspiegel 75 ist bei dem dargestellten Ausführungsbeispiel mit Federkraft in die gezeigte Wirkstellung vorgespannt und wird beim Einführen der Endlosbandkassette 1 in die Aufnahmeöffnung 72 sowie beim Entnehmen der Kassette 1 zur Seite hin in Richtung der Lichtquelle 73 durch geeignete Mittel ausgerückt.

Das Wiedergabegerät 70 verfügt über eine elektrische bzw. magnetisch betätigbare Filmtransportvorrichtung 82, die nach Maßgabe eines digitalen Schaltsignals das Filmband um einen oder mehrere Bildfeldabstände weiterschaltet.

Bei dem in den Figuren 8 bis 10 dargestellten Bildwiedergabegerät ist zur Auswahl eines bestimmten Bildes der auf dem Endlosfilmband aufgezeichneten Bildfolge ein über ein Tastenfeld 83 als Eingabeeinheit bedienbarer Prozessor 84 vorgesehen. Seine Funktionsweise beruht darauf, einem beispielsweise als dreistellige Zahl über die Eingabetastatur 83 eingegebenen Bildaufruf durch Abfragen der Iststellung des als Bildträger dienenden Endlosbandes und geeignete Weiterschaltung der Transportvorrichtung 82 das zugehörige Bildfeld vor das Bildfenster 14 zu bringen und
auf dem Sichtschirm 71 zur Anzeige zu bringen.

Zu diesem Zweck muß dem Prozessor bei jeder Bildanforderung
eine Information über die Stellung des aufgerufenen Bildes
auf dem Filmband in der im Gerät 70 eingesetzten Endlosbandkassette zur Verfügung stehen. Diese Information wird
vorzugsweise dadurch gewonnen, daß das Filmband 4 (Fig. 1)
mit einer in Längsrichtung, d.h. parallel zur Perforationsreihe 38 verlaufenden geeigneten Magnetcode- oder Lichtcodespur versehen ist, die in Zuordnung zu den auf dem Filmband
befindlichen Bildfeldern unterschiedlich kodiert ist. Diese
Codespur wird von einem in den Figuren 8 und 9 schematisch
dargestellten Lesekopf 85, der durch eine geeignete Öffnung
in der Außenwand 16 des Kassettengehäuses 2 wirksam werden
kann, entweder magnetisch oder lichtoptisch abgetastet. Bei
der lichtoptischen Abtastung und entsprechenden Kodierung
der Codespur kann das Licht der Lichtquelle 73 beispielsweise
durch eine geeignete Schlitzblende oder Ablenkung auf den
als Lichtdetektor ausgebildeten Lesekopf 85 ausgenutzt werden.
In vielen Fällen wird es bei der lichtoptischen Codeabtastung
zweckmäßig sein, die Lichtabtastung durch ein optisches
Faserbündel vorzunehmen, dessen Lichteintrittsseite auf
die lichtoptische Codespur des Filmbandes 4 gerichtet und
dessen Austrittsseite mit einem geeigneten Dekodierer 86
gekoppelt ist.

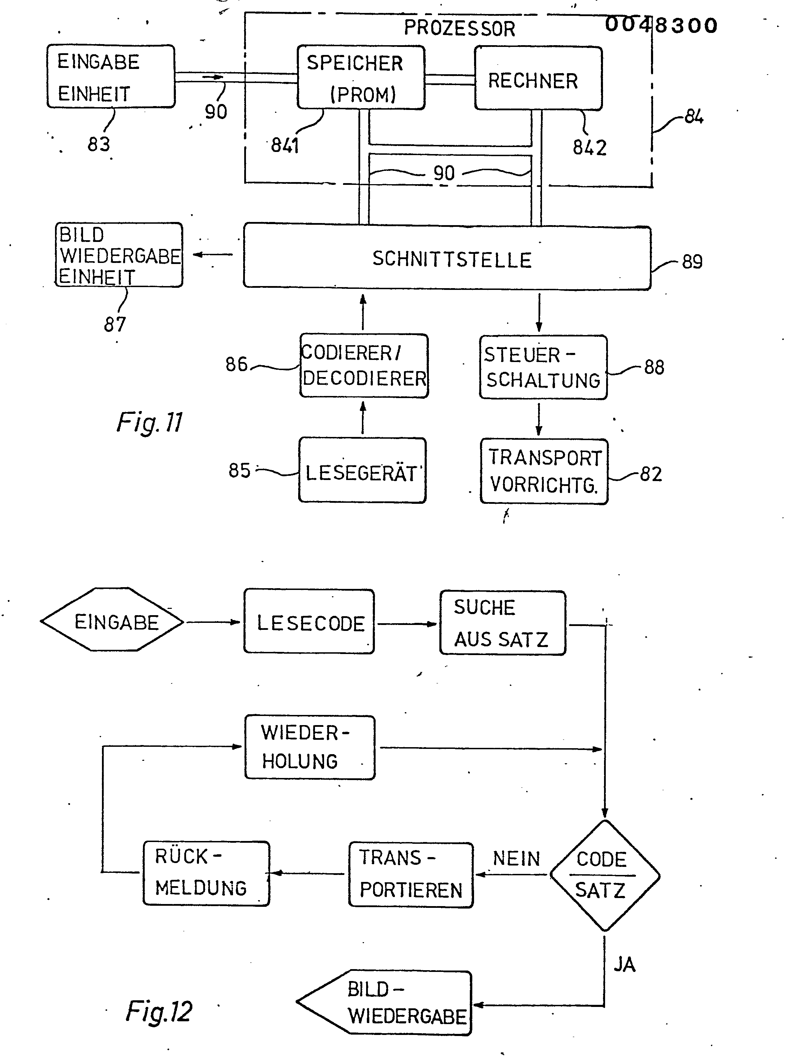

Der Aufbau und die grundsätzliche Funktionsweise der vom
Prozessor 84 nach Maßgabe des über die Tastatur 83 eingegebenen Befehls gesteuerten Bildaufrufseinrichtung ist
in Fig. 11 und deren grundsätzliche Funktionsweise im
Operationsablaufsdiagramm gemäß Figur 12 dargestellt.

Der Prozessor selbst weist bei dem beschriebenen Ausführungsbeispiel einen Speicher, insbesondere einen programmierbaren Festwertspeicher 841 und einen Rechner
842 auf, die untereinander, mit der Eingabeeinheit 83 und
mit einer die Peripheriegeräte, nämlich eine Bildwiedergabeeinheit 87, das Lesegerät 85 und die Transportvorrichtung
82 über eine Steuerschaltung 88 ankoppelnden Schnittstelle
über Sammelkanäle 90 verbunden sind.

Bei Aufruf eines bestimmten Bildes der auf dem Filmband
4 aufgezeichneten Bildfolge beispielsweise durch Eintasten
der Zahl 156 an der Tastatur 83 (Fig. 10) wird der Speicher
841 adressiert und das Lesegerät 85 zur Feststellung der
Istlage des Filmbandes aktiviert. Im Rechner 842 erfolgt
ein Vergleich des adressierten Speicherplatzes (Code) mit
dem vom Lesegerät 85 gelieferten Signal (Satz). Je nach
dem Ergebnis dieses Vergleichs wird entweder die Transportvorrichtung 82 zum Fortschalten des Filmbandes 4 betätigt
oder die Bildwiedergabe ausgelöst und das dem Bildfenster
gegenüberliegende Bildfeld des Filmbandes 4 als das aufgerufene Bild auf dem Rückwärtsprojektionsschirm 71 zur Anzeige gebracht (Bildwiedergabe). Nach jedem Transportschritt
wird der Vergleich wiederholt, und zwar solange, bis der
Vergleich zwischen dem eingetasteten Code und dem vom Lesegerät 85 gelesenen Code Übereinstimmung ergibt.

Ein programmierbarer Festwertspeicher (PROM) eignet sich
für die genannten Zwecke besonders gut, da er seinen
Speicherinhalt selbst bei Abschaltung der elektrischen
Energie des Geräts unverändert beibehält und andererseits
in Abstimmung auf den Verwendungszweck des Geräts und den
Bildinhalt auf der Endlosbandkassette 1 umprogrammierbar
ist.

Anstelle eines beliebig rascher Folge durchgeführten Vergleichs bei jedem Transportschritt kann auch nach
Abtastung der momentanen Lage des Filmbandes über das Lese-

0048300

gerät vom Prozessor ein Unterprogramm abgewickelt werden,
bei dem eine bestimmte Anzahl von Transportschritten (bis
zum Erreichen des gesuchten Bildfeldes auf dem Filmband)
ohne Zwischenvergleiche durchgeführt wird.Anstelle einer
besonderen Codespur auf dem Filmband kann in der Endlosbandkassette auch ein geeigneter Zähler eingebaut sein,
der von einem geräteeigenen Lesegerät abgefragt wird.
Bei einer alternativen Ausführung kann das Endlosfilmband
an einer bestimmten (Anfangs-) Stelle mit einer abtastbaren
Marke versehen sein, zu der das Filmband nach Beendigung
eines Bildaufrufs immer wieder zurückgeführt wird und von
der aus bei jedem neuen Bildaufruf eine in den Speicher eingegeben     Transportschrittfolge zum Erreichen des neuen
Bildfelds abgewickelt wird.

Der Benutzer des zuvor beschriebenen Projektionssystem
kann nach einer Codetabelle einen bestimmten Bildinhalt
durch einfache Zahleneingabe aufrufen. Insofern eignet
sich das beschriebene Gerät besonders als Bordsichtgerät
in Kraftfahrzeugen zur Anzeige verschiedener Karten oder
Wegstrecken, wobei über eine einzige billige Endlosbandkassette mit einem Filmband des Super-8-Formats beispielsweise 400 Karten oder Kartenausschnitte sichtbar gemacht
werden können und bei Auswechseln der Kassette der Bildinformationsinhalt beliebig erweitert werden kann. Weitere
Anwendungsgebiete sind der Haushaltsbereich (Küchenrezepte,
Backzeiten, Bedienungsanleitungen von Küchengeräten), im
Wartungsbereich Schalt- und Konstruktionspläne einer Vielzahl von Geräten unterschiedlicher Bauart, Anschriftenverzeichnisse und die Speicherung und Sichtbarmachung bestimmter Buchhaltungsdaten, Bestandsdaten und Katalogauszüge.

Die beschriebene Endlosbandkassette eignet sich prinzipiell
ebenso wie die beschriebenen Bildwiedergabe- und Bildaufnahmegeräte auch für die Laufbildwiedergabe und -aufnahme.
Bei der Endlosbandkassette gemäß Darstellung in den Fig. 1
bis 3 ergeben sich keine Änderungen; das Endlosfilmband
4 wird über das Kupplungsteil 36 von einem geeigneten
Schrittschaltmotor bildweise fortgeschaltet. Ähnliches
gilt für die Anordnung gemäß Fig. 6, bei der das Schaltrad
52 mit gleichmäßiger Drehgeschwindigkeit gedreht wird und
der Greifer 46 das Filmband 4 bildweise fortschaltet. Insofern ist die beschriebene Endlosbandkassette sowohl zur
Einzelbildbetrachtung bzw. -aufnahme als auch zur Laufbildbetrachtung für Kurzfilme geeignet.

Ansprüche

=================

1. Endlosbandkassette, gekennzeichnet durch

   a) ein Endlosfilmband (4) für die lichtoptische Aufnahme
      und/oder Wiedergabe von in Band-Längsrichtung hintereinander angeordneten Einzelbildern (32), vorzugsweise
      in Super-8-Format;

   b) ein Gehäuse (2) mit einer Vorratskammer (8), in der
      der größte Teil des Endlos-Filmbandes (4) in mehreren
      Lagen zu einer Rolle (10) mit freiem Innenraum aufgewickelt ist und die Bildschleife (22) des Filmbandes
      (4) innen und außen im wesentlichen tangential der
      Rolle (10) zugeführt bzw. von dieser abgeführt wird,
      ferner mit einer neben der Vorratskammer (8) gelegenen
      Lichtdurchtrittskammer (12), die eine ein Bildfenster
      (14) begrenzende Außenwand (16) und eine dieser
      gegenüberliegende und/oder seitliche Lichteintrittsöffnung (18) aufweist, und mit einer zwischen beiden
      Gehäusekammern (8, 12) gelegenen Trennwand (28) in
      der Durchgangsöffnungen (30a, 30b) zur Durchführung
      der zu- und ablaufenden Abschnitte der Bildschleife
      (22) ausgebildet sind; und

   c) Führungsmittel (24, 6; 56, 58) zur Führung eines Abschnitts der Bildschleife (22) in einer Ebene vor und
      parallel zu dem Bildfenster (14).

Z/ko.

BAD ORIGINAL

2. Endlosbandkassette nach Anspruch 1, dadurch gekennzeichnet, daß das Endlosband (4) eine parallel zu der Reihe von
Einzelbildern (32) in Längsrichtung verlaufende Perforationsreihe (38) hat und daß in der Lichtdurchtrittskammer (12)
eine formschlüssig in die Perforation (38) eingreifende
Transportvorrichtung (6) zum Transport des Endlosbandes
(4) um jeweils einen Bildschritt vorgesehen ist.

3. Endlosbandkassette nach Anspruch 2, dadurch gekennzeichnet, daß die Transportvorrichtung ein parallel zur Band-
Wickelachse drehbar gelagertes, mit der Perforation (38)
in Eingriff stehendes Transportzahnrad (6) und ein mit
diesem über eine Lagerwelle (34) drehfest verbundenes, durch
ein Schaltwerk (z.B. 21) betätigbares Antriebsrad (36) aufweist.

4. Endlosbandkassette nach Anspruch 3, dadurch gekennzeichnet, daß das Ende der Lagerwelle (34) in einer Durchgangsöffnung einer Außenwand des Gehäuses (2) gelagert und mit
einem Kupplungsteil (36) zum formschlüssigen und lösbaren
Eingriff eines Drehantriebs (21) versehen ist.

5. Endlosbandkassette nach einem der Ansprüche 1 bis 4,
dadurch gekennzeichnet, daß federnde Rastmittel (56, 58
- Fig. 6), die unmittelbar oder mittelbar über das Transportzahnrad (6) an dem Filmband (4) zu dessen Lagefestlegung
in vorgegebenen Stellungen mit Bezug auf das Bildfenster
(14) angreifen, in dem Kassettengehäuse (2) befestigt sind.

6. Endlosbandkassette nach Anspruch 5, dadurch gekennzeichnet, daß das federnde Rastmittel eine am freien Ende
einer einseitig gehäusefesten Federzunge (58) angeordnete,
an einer vorgegebenen Stelle der Bildschleife (22) in ein
gegenüberliegendes Perforationsloch (38') eingreifende
Rastnase (36) ist.

7. Endlosbandkassette nach einem der Ansprüche 1 bis 6, dadurch gekennzeichnet, daß das Gehäuse (2) als dreiteiliger Spritzgußformteil ausgebildet ist und einen die Trennwand zwischen den beiden Kammern (8, 12) bildenden plattenförmigen Mittelteil (28), ein als geschlossene Haube ausgebildetes erstes Außenbauteil (40), das gemeinsam mit dem plattenförmigen Mittelteil (28) die Vorratskammer (8) begrenzt, und ein auf der anderen Seite des plattenförmigen Mittelteils (28) angeordnetes zweites Außenteil (42) aufweist, das gemeinsam mit dem Mittelteil die Lichtdurchtrittskammer (12) begrenzt, wobei im plattenförmigen Mittelteil (28) zwei schlitzartige Durchtrittsöffnungen (30a, 30b) zum Zu- und Ablauf der Bildschleife (22) ausgebildet sind.

8. Endlosbandkassette nach einem der Ansprüche 1 bis 7, dadurch gekennzeichnet, daß das Gehäuse (2) am Umfang der Trennwand (28) von vier etwa rechtwinklig zueinander verlaufenden Außenwänden begrenzt ist, daß die Vorratskammer (8) eine der Trennwand gegenüberliegende, zu diesen vier Außenwänden rechtwinklig verlaufende weitere Außenwand hat und daß die Lichtdurchtrittskammer (12) an der der Trennwand (48) gegenüberliegenden Seite einen zur Trennwand schräg verlaufenden Wandabschnitt hat, dessen Neigung so gewählt ist, daß die das Bildfenster (14) enthaltende Außenwand (16) breiter ist als die dem Bildfenster (14) entgegengesetzte Seite der Lichtdurchtrittskammer (12).

9. Endlosbandkassette nach einem der Ansprüche 1 bis 8, dadurch gekennzeichnet, daß in der Lichtdurchtrittskammer (12) eine Spiegelfläche (75 - Fig. 8) derart angeordnet ist, daß ein von der Seite in die Lichtdurchtrittskammer einfallender Lichtstrahlengang rechtwinklig in das Bildfenster (14) geworfen wird.

10. Endlosbandkassette nach Anspruch 9, dadurch gekennzeichnet, daß die Spiegelfläche (75) als teildurchlässige
Fläche ausgebildet und für Licht mit einer auf das Bildfenster (14) gerichteten Strahlenachse durchlässig ist.

11. Endlosbandkassette nach einem der Ansprüche 1 bis 10,
dadurch gekennzeichnet, daß auf dem Endlosband (4) eine
parallel zur Bildreihe in Längsrichtung verlaufender Code
zur Kennung der Einzelbilder (32) angeordnet ist und daß
in dem Bildschleifenabschnitt wirksame Mittel (z.B. 85
- Fig. 8) zum Abtasten der Codespur vorgesehen sind.

12. Gerät für die lichtoptische Bildwiedergabe unter Verwendung einer Endlosbandkassette nach einem der Ansprüche
1 bis 11, deren auf dem Filmband angeordneten Bildfelder
mit Licht von einer Lichtquelle durchstrahlt und an einem
Einblick oder Sichtschirm sichtbar gemacht werden,
d a d u r c h   g e k e n n z e i c h n e t ,   daß in
einem Gerätegehäuse (3; 78) im Strahlengang zwischen einer
Betrachtungsebene (24 - Fig. 3; 100 - Fig. 4 und 8, 9)
und dem Einblick (5a, 5b; 71) ein optisches Vergrößerungssystem (14, 19 - Fig. 4; 76 - Fig. 8, 9) angeordnet ist,
das ein in der Betrachtungsebene gelegenes Bild (32 - Fig.
1) in der Einblickebene vergrößert abgebildet, daß im Bereich der Betrachtungsebene eine Ausnehmung (72 - Fig. 10)
zur Aufnahme der Endlosbandkassette (1) ausgebildet ist
und Mittel zum lösbaren Festlegen der Endlosbandkassette
in der Ausnehmung vorgesehen sind, wobei das Bildfenster
(14) der Endlosbandkassette (1) mit dem Strahlengang (18
- Fig. 4; 77 - Fig. 8) des Beleuchtungslichts ausgerichtet
ist, und daß eine eine Transportvorrichtung (6; 46) zum
bildweisen Fortschalten des Filmbandes (4) betätigende
Schaltvorrichtung (21; 21'; 82) von außen bedienbar am
Gerätegehäuse (3; 48) gehaltert ist.

0048300

13. Gerät nach Anspruch 12, dadurch gekennzeichnet, daß ein Strahlenteiler (11a) in Lichteinfallrichtung hinter der Betrachtungsebene (100) im Gerätegehäuse (3) angeordnet ist, der den Strahlengang (18) des durch das Kassetten-Bildfenster (14) in das Gerätegehäuse einfallenden Lichts in zwei getrennte Strahlengänge (7a, 7b) teilt, und daß die geteilten Strahlengänge nach Faltung an jeweils wenigstens einer Spiegefläche (9a, 11b, 9b) in einen zweiäugigen Einblick (5a, 5b) gerichtet werden.

14. Gerät nach Anspruch 13, dadurch gekennzeichnet, daß der Strahlenteiler ein unter 45$^{\circ}$ zur Lichteinfallrichtung geneigter, teildurchlässiger Spiegel (11a) oder eine unter 45$^{\circ}$ zur Lichteinfallrichtung geneigte Prismenfläche ist.

15. Gerät nach Anspruch 12, dadurch gekennzeichnet, daß der Einblick als in das Gerätegehäuse (78) integrierter Rückwärtsprojektionsschirm (71) ausgebildet ist, auf dem ein von der Vergrößerungsoptik (76) vergrößertes und an einer Spiegelfläche (80) gefaltetes Bild aus der Betrachtungsebene (100) mit einer geräteeigenen Lichtquelle (73) abbildbar ist.

16. Gerät nach Anspruch 15 in Kombination mit einer Bandkassette nach Anspruch 11, dadurch gekennzeichnet, daß zur Auswahl eines bestimmten Bildes (32) der auf dem Endlosband (4) aufgezeichneten Bildfolge und/oder zur Wiedergabe aufeinanderfolgender Einzelbilder (32) eine Eingabetastatur (83) vorgesehen ist, daß ein Code-Lesegerät (85), das einen die Codespur des Endlosbandes (4) abtastenden Abtastkopf aufweist, mit einem einen Programmspeicher (841) enthaltenden Prozessor (84) verbunden ist, der einen über die Eingabetastatur (83) eingegebenen Code mit dem vom Lesegerät (85) abgetasteten Einzelbildcode vergleicht und nach Maßgabe dieses Vergleichs entweder ein Signal zum Weiterschalten der Film-
band-Transportvorrichtung (82) entwickelt oder eine Wiedergabe des dem abgetasteten Code zugeordneten Bildes (32)
bei gesperrter Transportvorrichtung (82) bewirkt.

17. Gerät nach Anspruch 16, dadurch gekennzeichnet, daß
der Prozessor (84) über eine Schnittstellenanordnung (89)
mit einer Steuerschaltung (88) für die Transportvorrichtung
(82), mit dem Lesegerät (85) und mit einer Bildwiedergabevorrichtung (87) gekoppelt ist.

18. Gerät für die lichtoptische Bildaufnahme unter Verwendung einer Endlosbandkassette nach einem der Ansprüche 1
bis 11, dadurch gekennzeichnet, daß im Gerätegehäuse hinter
einem Kameraobjektiv (64) und einem Verschluß (63) ein zum
Gehäuse (2) der Endlosbandkassette (1) im wesentlichen
komplementär gestalteter Aufnahmeschacht vorgesehen ist,
daß eine eine Transportvorrichtung (6; 46) zum bildweisen
Fortschalten des Filmbandes (4) betätigende Schaltvorrichtung (21; 21') von außen bedienbar am Gerätegehäuse gelagert
ist und daß im Gerätegehäuse ein zweiäugiger Einblick (62a,
62b) vorgesehen ist.

19. Gerät nach Anspruch 12 oder 18, dadurch gekennzeichnet,
daß die Schaltvorrichtung (21) ein  im Gerätegehäuse (2; 48)
drehbar gelagertes Klinkenrad (29), eine mit dem Klinkenrad
 federnd in Eingriff gedrängte Sperrklinke (31), eine in
eine Ausnehmung eines Klinkenzahnkranzes (29e) eingreifende
Schaltklinke (33),die über einen Hebeltrieb (35) oder
Schieber zum Drehen des Klinkenrades (29) um einen einem
Schaltschritt entsprechenden Drehwinkel über einen vorgegebenen Bewegungshub bewegbar ist, und einen mit dem
Klinkenrad (29) drehfest verbundenen, entgegen einer Federvorspannung axial verschiebbar im Gerätegehäuse gelagerten
Kupplungskopf (23) aufweist, der     mit einem in der Endlosbandkassette (1) drehbar gelagerten Kupplungsteil (36)
formschlüssig verbindbar ist.

20. Gerät nach Anspruch 19, dadurch gekennzeichnet, daß eine mechanische Stellvorrichtung (41 ... 49) mit einem von der Geräteaußenseite bedienbaren Betätigungsorgan (49) zum axialen Verschieben des Kupplungskopfes (23) im Gerätegehäuse (z.B. 3; 78) vorgesehen ist.

0048300

Fig.1

Fig.2

Fig.3

Fig.6

Fig. 4

Fig. 7

ZENZ & HELBER
PATENTANWÄLT
AM RUHRSTEIN
D 4300 ESSEN

Fig. 5

31  29e  33  35  49  37

29

29 a

23  45  25  27  43

41  47

21

39

ZENZ & HELBER
PATENTANWÄLTE
AM RUHRSTEIN 1
D 4300 ESSEN 1

0048300

Fig.9

76
85
100
78

77

Fig.10

71

83      72
70

84
1
100
85
76
75
74
82
73

70

77

80

Fig.8

ZENZ·&·HELBER
PATENTANWÄLTE
AM RUHRSTEIN 1
D 4300 ESSEN 1

0048300

0048300

PROZESSOR

EINGABE EINHEIT
83

90

SPEICHER (PROM)
841

RECHNER
842

84

BILD WIEDERGABE EINHEIT
87

90

SCHNITTSTELLE
89

CODIERER/ DECODIERER
86

STEUER - SCHALTUNG
88

Fig. 11

LESEGERÄT
85

TRANSPORT VORRICHTG.
82

EINGABE → LESECODE → SUCHE AUS SATZ

WIEDER- HOLUNG

RÜCK- MELDUNG ← TRANS- PORTIEREN ← NEIN ← CODE/SATZ

JA

BILD- WIEDERGABE

Fig. 12

ZENZ & HELBER
PATENTANWÄLTE
AM RUHRSTEIN 1
D 4300 ESSEN 1

0048300

Europäisches
Patentamt

EUROPÄISCHER RECHERCHENBERICHT

Nummer der Anmeldung

EP 80 10 5726.6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | DE - U - 7 603 449 (BLICK IN DIE WELT FILM- UND DOKUMENTATIONSGESELLSCHAFT) <br> * Fig. 6, 9 * <br> -- | 1,12 |
| | DE - B2 - 2 507 249 (D.W. LIEDTKE) <br> * Fig. 1 * <br> -- | 1,12 |
| D | US - A - 3 817 610 (J.R. SKINNER et al.) <br> -- | |
| A | GB - A - 1 454 951 (ARUANNO ANGELA) <br> * Seiten 1, 2, 10 bis 16; Fig. 1 bis 3 * <br> ---- | |

**KLASSIFIKATION DER ANMELDUNG (Int. Cl.³)**

G 03 B 21/32

G 03 B 17/26

G 03 B 19/18

G 02 B 27/02

**RECHERCHIERTE SACHGEBIETE (Int. Cl.³)**

G 02 B 27/00

G 03 B 17/00

G 03 B 19/00

G 03 B 21/00

**KATEGORIE DER GENANNTEN DOKUMENTE**

X: von besonderer Bedeutung

A: technologischer Hintergrund

O: nichtschriftliche Offenbarung

P: Zwischenliteratur

T: der Erfindung zugrunde liegende Theorien oder Grundsätze

E: kollidierende Anmeldung

D: in der Anmeldung angeführtes Dokument

L: aus andern Gründen angeführtes Dokument

&: Mitglied der gleichen Patentfamilie, übereinstimmendes Dokument

| X | Der vorliegende Recherchenbericht wurde für alle Patentansprüche erstellt. |
|---|---|

| Recherchenort | Abschlußdatum der Recherche | Prüfer |
|---|---|---|
| Berlin | 07-05-1981 | HOPPE |

EPA form 1503.1  06.78